# EUROPEAN PATENT APPLICATION

(11) **EP 4 371 750 A1**
(43) Date of publication of application: **22.05.2024**
(21) Application number: 22208438.6
(22) Date of filing: 18.11.2022
(51) Int. Cl.: B29D 11/00

(54) **POLARIZING PVA WAFER FOR REDUCING OPTICAL DISTORTION**

(71) Applicant: Essilor International, 94220 Charenton-Le-Pont (FR)
(72) Inventor: GONZALEZ, Carlos Omar, Dallas, TX 75234 (US); DANTAS DE MORAIS, Tony, 94220 Charenton-le-Pont (FR); POLANCO DOMINGUEZ, Aaron, Dallas, TX 75234 (US)
(74) Representative: Plasseraud IP

(57) **Abstract**

The present disclosure relates to a polarizing ophthalmic lens comprising a polymeric material and a polarizing wafer, the polarizing wafer being embedded into the polymeric material or positioned on a surface of the polymeric material, the polarizing wafer comprising, stacked to one another in the following order:
A1) a thermoplastic film,
B) a PVA polarizing film,
A2) a thermoplastic film,

the thickness of A1) and the thickness of A2) being identical or different, and wherein the thickness of A1) and the thickness of A2) are each lower than or equal to 50 µm,
the thickness of B) is lower than or equal to 40 µm;

It also relates to the use of a polarizing wafer for conferring polarizing properties to an ophthalmic lens while avoiding or limiting optical distortion, to a process for preparing such an ophthalmic lens and to a primer coated wafer for manufacturing such a lens.

## Description

### FIELD OF THE INVENTION

The present disclosure relates to polymeric ophthalmic lenses having polarizing properties.

It relates in particular to the use of a polarizing wafer for conferring polarizing properties to an ophthalmic lens while avoiding or limiting optical distortion.

It also relates to a process for preparing such an ophthalmic lens.

It also relates to a primer coated wafer.

### PRIOR ART

An optical wafer may be included in an ophthalmic lens for providing a function to the ophthalmic lens. Said function may be a light-absorbing function (e.g. for absorbing UV light, visible light, and/or IR light), a photochromic function, a polarizing function, a color-enhancing function.

Optical wafers are thus films having optical and thermomechanical properties making them suitable for inclusion in ophthalmic lenses and comprising a functional film providing the desired function or functions to the lens. In some cases, the wafer may be the ophthalmic lens itself.

An optical wafer may be included in an ophthalmic lens by inserting the optical wafer in a lens mold and injection-molding (in the case of a thermoplastic lens substrate) or casting (in the case of a thermosetting lens substrate) the lens substrate in the lens mold against the optical wafer. The optical wafer may thus be included on the front face of the lens substrate, on the back face of the lens substrate or embedded in the lens substrate.

An optical wafer may also be included in an ophthalmic lens by laminating the optical wafer on the lens substrate. In this case, an adhesive may be used for ensuring strong adhesion of the optical wafer on the lens substrate.

Generally, optical wafers are produced by cutting them to the desired dimensions from a film having the same structure of layers as the wafer.

When optical wafers are included in an ophthalmic lens via injection molding or casting, it is also necessary to form the wafer prior to the injection molding or casting, in order to give to the wafer a curvature adapted to the desired curvature of the lens. Said forming is performed by heating and pressing the wafer in a former.

During this process, it is important to protect the wafer, or the film used to produce the wafer, to avoid cosmetic defects in the final lens. For example, the wafer, or the film used to produce the wafer, needs to be protected from possible contamination or from scratches. For this purpose, the optical wafer, or the film used to produce the wafer, is covered with a peelable liner on one or both of its main faces. The liner is removed when needed in the final steps of the process (for example before the injection molding or casting step or before laminating the optical wafer on the lens substrate).

Polarizing wafers are typically made from a PVA film. Such wafer is widely used in sunglass lenses for instance. In order to increase to robustness of the wafer and facilitate its handling during the casting of the lens, the polarizing PVA film can be sandwiched between two transparent protective layers of a thermoplastic material.

Typically, the overall thickness of the TAC/PVA/TAC wafer is around 200 µm.

However, the wafer and the polymeric material of the lens exhibit different mechanical properties such as hardness.

After demolding from the casting cell, the lens undergoes further treatments, such as surfacing and hard coating, and can exposed to high temperatures. During these treatments, the polymeric material of the lens releases stress and deforms. The deformation of the polymeric material is not at the same level as the wafer deformation. Furthermore, the deformation at the thinnest area of the lens is not the same as the thickest area. This differential of deformation may cause an optical distortion of the lens. It has been found that there is a correlation between the optical distortion of the lens and the thickness of the wafer. The higher the thickness of the wafer, the higher the optical distortion.

The wafer of the present disclosure aims to remedy these drawbacks.

### SUMMARY

One aspect of the present disclosure is a polarizing ophthalmic lens comprising a polymeric material and a polarizing wafer, the polarizing wafer being embedded into the polymeric material or positioned on a surface of the polymeric material, the polarizing wafer comprising, stacked to one another in the following order:
A1) a thermoplastic film,
B) a PVA polarizing film,
A2) a thermoplastic film,
A1) and A2) being identical or different,
the thickness of A1) and the thickness of A2) being identical or different, and
wherein the thickness of A1) and the thickness of A2) are each lower than or equal to 50 µm,
the thickness of B) is lower than or equal to 40 µm.

Another aspect of the present disclosure is the use of a polarizing wafer in an ophthalmic lens comprising a polymeric material,
the polarizing wafer being embedded into the polymeric material or positioned on a surface of the polymeric material,
the polarizing wafer comprising the following structure:
   A1) a thermoplastic film,
   B) a PVA polarizing film,
   A2) a thermoplastic film,
   A1) and A2) being identical or different,
   the thickness of A1) and the thickness of A2) being identical or different,
   wherein the thickness of A1) and the thickness of A2) are each lower than or equal to 50 µm,
   the thickness of B) is lower than or equal to 40 µm,
   for conferring polarizing properties to the lens while avoiding or limiting optical distortion.
Another aspect of the present disclosure is a method for manufacturing a polarizing ophthalmic lens according to any one of claims 1 to 16, comprising the following steps:
   - Providing a polarizing wafer comprising, stacked to one another in the following order:
      A1) a thermoplastic film,
      B) a PVA polarizing film,
      A2) a thermoplastic film,
      A1) and A2) being identical or different,
      the thickness of A1) and the thickness of A2) being identical or different, and
      wherein the thickness of A1) and the thickness of A2) are each lower than or equal to 50 µm,
      the thickness of B) is lower than or equal to 40 µm;
   - Providing a liquid polymerizable composition containing monomers or oligomers which form the polymeric material when polymerized;
   - Cutting and forming the polarizing wafer so as to obtain a curved polarizing wafer;
   - Placing the curved polarizing wafer in a casting cell;
   - Introducing the polymerizable liquid composition in the casting cell and depositing the polymerizable liquid composition on one side of the polarizing wafer or so as the polarizing wafer is embedded into the polymerizable liquid composition;
   - Polymerizing the polymerizable liquid composition in the casting cell thereby obtaining a polymerized material; and
   - Demolding the polymerized material.
Another aspect of the present disclosure is a polarizing wafer comprising the following structure:
   A1) a thermoplastic film,
   B) a PVA polarizing film,
   A2) a thermoplastic film,
   A1) and A2) being identical or different,
   the thickness of A1) and the thickness of A2) being identical or different,
   wherein the thickness of A1) and the thickness of A2) are each lower than or equal to 50 µm,
   the thickness of B) is lower than or equal to 40 µm,
   wherein the polarizing wafer further comprises a dried primer layer D1) applied on layer A1) and/or a dried primer layer D2) applied on layer A2), D1) and D2) being identical or different.

### DETAILED DESCRIPTION

The wafer of the present disclosure allows good processability in forming and casting. It is thinner than other TAC/PVA/TAC laminates on the market. It still provides benefits in terms of handling since the PVA film is protected and enclosed on each side by two layers of TAC film.

The forming process remains simple. A film treatment step is not required, allowing for good cost savings in the forming and casting process.

The polarizing wafer of the present disclosure can be used for manufacturing polarizing ophthalmic lenses of refractive indexes of 1.5, 1.6 and 1.67 obtained by casting processes.

The polarizing wafer of the present disclosure provides a better customer perception, improves quality, and reduces manufacturing costs.

### Polarizing wafer

The polarizing wafer may be attached to one surface of the lens, two surfaces of the lens, or embedded in the lens or any combination thereof.

The polarizing wafer may be manufactured using a thin polyvinyl alcohol (PVA) polarizing film. To manufacture a lens including a PVA polarizing film, the PVA polarizing film may be subjected to several handling steps, including thermoforming, cutting to a desired diameter, primer application, and fitting into a casting cell. The fragile nature of a thin PVA polarizing film coupled with these multiple processing steps may increase the potential for film damage. As such, the polarizing PVA film of the present disclosure is laminated between triacetyl cellulose (TAC) films in order to provide robust protective support layers over the PVA film surfaces. A polarizing wafer including a PVA polarizing film laminated between TAC thermoplastic films may be referred to as a TAC-PVA-TAC laminate.

The thermoplastic film A1) and the thermoplastic film A2) are identical or different.

The thickness of A1) and the thickness of A2), identical or different, are each lower than or equal to 50 µm.

In one embodiment, the thickness of the thermoplastic film A1) and the thickness of the thermoplastic film A2), identical or different, are from 25 µm to 80 µm, in particular from 28 µm to 60 µm, in particular from 30 µm to 55 µm, in particular from 33 µm to 50 µm, in particular from 35 µm to 45 µm, in particular from 36 µm to 44 µm, in particular from 37 µm to 43 µm, in particular from 38 µm to 42 µm, in particular from 39 µm to 41 µm.

The thickness of PVA polarizing film B) is lower than or equal to 40 µm.

In one embodiment, the thickness of B) is from 25 µm to 35 µm, in particular from 26 µm to 34 µm, in particular from 27 µm to 33 µm, in particular from 28 µm to 32 µm, in particular from 29 µm to 31 µm.

In one embodiment, the wafer of the present disclosure further comprises an intermediate adhesive layer C1) placed between film B) and layer A1) and/or an intermediate adhesive layer C2) placed between film B) and layer A2).

The intermediate adhesive layer can comprise polyurethane, glyoxal or EVOH.

In one embodiment, the thickness of intermediate adhesive layer C1) and the thickness of intermediate adhesive layer C2), identical or different, are each lower than or equal to 4 µm.

In one embodiment, the thickness of C1) and the thickness of C2), identical or different, are from 0.5 µm to 3.5 µm, in particular from 1 µm to 3 µm, in particular from 1.5 µm to 2.5 µm.

In one embodiment, the wafer further comprises a dried primer layer D1) applied on layer A1) and/or a dried primer layer D2) applied on layer A2), D1) and D2) being identical or different.

The primer layer may be used to increase adhesion of a TAC film to the polymeric material of the lens. For example, KR993596 B1 describes a primer coating for improving adhesion between a TAC film and a cast CR-39 plastic lens in which a TAC laminate is embedded. WO2018/052454 and WO2019175354A1 describe a primer coating for improving adhesion between a TAC film and a cast CR-39 plastic lens in which a TAC laminate is embedded. To prepare a CR-39 lens with an embedded TAC laminate, a TAC laminate having a primer coating deposited on the lens-contacting surface of the laminate is placed within a CR-39 monomer so that both surfaces of the TAC polarizing laminate are contacting the CR-39 monomer. The CR-39 monomer is polymerized to provide a solid polarizing lens where the polarizing function is provided by the TAC polarizing laminate embedded inside the lens. WO2021/170702 describes a primer coating for improving the adhesion of a TAC polarizing laminate which is positioned and cast on top (TAC-on-TOP) of the poly(thio)urethane lens, such as an ultra-high-index UHI Mitsui MR-7^{®} lens. In a TAC-on-TOP lens, there is only one adhesion interface to a TAC film or a TAC laminate to a UHI lens. Since TAC itself may not have sufficient adhesion to a UHI lens, a primer coating may be required to adhere a TAC film or a TAC laminate to a UHI lens.

A primer composition may be applied to any one surface of the wafer or to both surfaces of the wafer. Preferably, the primer composition is applied to one main surface of the wafer.

The primer composition may be applied to the wafer by any method, including, but not limited to, spraying or roll coating. The primer composition may be air-dried or air oven dried and may be cured with UV irradiation or exposure to heat. Preferably, the primer composition is air oven dried and then cured with UV irradiation prior to the next step.

The cured degree of the primer composition is not limited. For example, the primer composition may be considered to be sufficiently cured when the primer composition does not move on the surface of the wafer in a casting cell for casting a lens described below. Additionally, the primer composition may be considered to be sufficiently cured when the primer coating composition does not appear to be wet.

A protective film layer may be applied onto the dried primer coated wafer to preserve surface quality integrity. In a roll-to-roll processes, the rolled up roll with a protective film layer attached, can be safely stored.

After application of the primer coating composition, wafer may be formed into a desired shape before a liner applied to protect the primer surface. For example, the wafer may be curved to fit into a casting cell for casting a lens or cut into a suitable shape or size. Preferably, the wafer is formed into a desired shape after the primer coating composition is sufficiently cured by UV or heat.

The thickness of D1) and the thickness of D2) are identical or different.

The thickness of D1) and the thickness of D2) can be each lower than or equal to 4 µm.

In one embodiment, the thickness of D1) and the thickness of D2), identical or different, are from 0.5 µm to 3.5 µm, in particular from 1 µm to 3 µm, in particular from 1.5 µm to 2.5 µm.

The thermoplastic film layers A1) and A2) are identical or different, and can comprise independently polycarbonate (PC), polymethyl methacrylate (PMMA), polyamide (nylon), polyester (PET), cellulose acetate butyrate (CAB), triacetyl cellulose (TAC), cyclic olefin copolymer (COC) or a mixture thereof.

In one embodiment, the wafer of the present disclosure has a curved shape.

### Ophthalmic lens

The polarizing ophthalmic lens of the present disclosure comprises a polymeric material and a polarizing wafer as described previously, the polarizing wafer being embedded into the polymeric material or positioned on a surface of the polymeric material.

In one embodiment, the polymeric material is a thermosetting polymer [CR39, MR7] or a thermoplastic polymer.

In one embodiment, the polarizing ophthalmic lens has a curved shape.

In one embodiment, the thickness of the polymeric material throughout the polarizing ophthalmic lens is not uniform. Indeed, typically the thickness at the center of the lens is lower than the thickness at the periphery of the lens.

In one embodiment, the thermoplastic polymer is polycarbonate.

In one embodiment, the thermosetting polymer is a urethane or thiourethane polymer [MR-7] or diethylene glycol bis allyl carbonate [CR39].

For example, a poly(thio)urethane lens such as a MR-7^{®} lens having a refractive index of about 1.67, maybe produced by polymerizing MR-7A^{®} (di-isocyante) and MR-7B^{®} (tri-thiol). The poly(thio)urethane lens may be a high refractive index lens (1.60) or an ultra-high refractive index lens (1.67). Poly(thio)urethane lenses often have an ultra-high index and may be preferably used in producing premium eyeglasses.

In one embodiment, the polarizing ophthalmic lens as described previously further comprises a hard coat applied on at least one surface of the polarizing ophthalmic lens.

In one embodiment, the ophthalmic lens is a semi-finished or a finished lens.

### Process for manufacturing the polarizing ophthalmic lens

The lens of the present disclosure can be manufactured by a process comprising the following steps:
- Providing a polarizing wafer comprising, stacked to one another in the following order:
   A1) a thermoplastic film layer,
   B) a PVA polarizing film,
   A2) a thermoplastic film layer,
   A1) and A2) being identical or different,
   the thickness of A1) and the thickness of A2) being identical or different, and
   wherein the thickness of A1) and the thickness of A2) are each lower than or equal to 50 µm,
   the thickness of B) is lower than or equal to 40 µm;
- Providing a liquid polymerizable composition containing monomers or oligomers which form the polymeric material when polymerized;
- Cutting and forming the polarizing wafer so as to obtain a curved polarizing wafer;
- Placing the curved polarizing wafer in a casting cell;
- Introducing the polymerizable liquid composition in the casting cell and depositing the polymerizable liquid composition on one side of the polarizing wafer or so as the polarizing wafer is embedded into the polymerizable liquid composition;
- Polymerizing the polymerizable liquid composition in the casting cell thereby obtaining a polymerized material; and
- Demolding the polymerized material.

In one embodiment, the monomers include at least one urethane monomer, preferably at least one thiourethane lens-casting monomer, such as MR-7^{®}.

In one embodiment, the monomers include CR39, i.e. a blend of allyl monomers and oligomers derived from diethylene glycol bis(allyl carbonate). 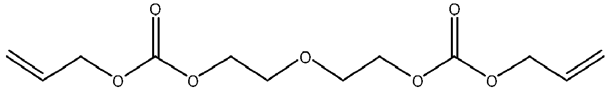 diethylene glycol bis(allyl carbonate)

The wafer and the polymerizable liquid composition may be placed in the casting cell so that a lens is formed on one surface of the wafer. The wafer and the polymerizable liquid composition may also be placed in the casting cell so that the wafer is embedded in the lens. Preferably, the wafer and the polymerizable liquid composition are placed in the casting cell so that a lens is formed on the wafer side to which a dried primer layer composition is applied.

Any casting cell suitable for casting a lens may be used. Also, casting conditions are not limited as long as a lens is properly formed from the lens-casting monomer in the casting cell.

After a lens is formed, the lens is demolded, i.e. removed from the casting cell, and optionally subjected to suitable treatments, such as prescription surfacing, hard coating and anti-reflective coating treatments.

### Use

Another aspect of the present disclosure is the use of the polarizing wafer of the present disclosure in an ophthalmic lens comprising a polymeric material, the polarizing wafer being embedded into the polymeric material or positioned on a surface of the polymeric material, for conferring polarizing properties to the lens while avoiding or limiting optical distortion.

### General definitions

As herein defined, an ophthalmic lens is a lens which is designed to be used in monocles or in eyeglasses (including sunglasses, goggles and safety glasses). As defined herein, contact lenses are not ophthalmic lenses. Ophthalmic lenses are typically used to protect the eye and/or correct the sight. Ophthalmic lenses can be uncorrective ophthalmic lenses (also called plano or afocal lenses) or corrective ophthalmic lenses. A corrective lens may be a unifocal, a bifocal, a trifocal or a progressive lens. As defined herein, ophthalmic lenses can be finished lenses of semi-finished lenses. A semi-finished lens undergoes various treatment steps such as surfacing, coloring, coating and edging before being finally included in eyeglasses or in a monocle. A finished lens is ready to be included in eyeglasses or in a monocle.

As defined herein, a film is a stack of one or more layers.

A layer corresponds to a thickness of a given material between two interfaces. As defined herein, a stack of two or more layers is not a layer. It is generally possible to observe the interface between two consecutive layers with a microscope.

Layers may be assembled by coextrusion or by pressing the layers one against the other. In some cases, inserting an adhesive layer between two layers before pressing them together helps assembling said two layers. In some cases, electrostatic forces between the layers are enough to assemble them with only minimal pressure. As defined herein, an adhesive layer counts as a layer.

In the present disclosure, a polymeric material may comprise only one polymer or a blend of polymers. It should be understood that, in this case, in addition to said only one polymer or polymer blend, the layer can comprise additives.

As defined herein, a film or a layer that is "positioned on" a surface is defined as a film or layer that (a) is positioned over that surface, (b) need not be in direct contact with that surface, i.e. one or more intervening layers may be disposed between that surface and the film or layer in question, and (c) need not cover that surface completely. However, preferably, the film or layer covers that surface completely.

## Claims

1. A polarizing ophthalmic lens comprising a polymeric material and a polarizing wafer, the polarizing wafer being embedded into the polymeric material or positioned on a surface of the polymeric material, the polarizing wafer comprising, stacked to one another in the following order:
A1) a thermoplastic film,
B) a PVA polarizing film,
A2) a thermoplastic film,
A1) and A2) being identical or different,
the thickness of A1) and the thickness of A2) being identical or different, and
wherein the thickness of A1) and the thickness of A2) are each lower than or equal to 80 µm,
the thickness of B) is lower than or equal to 40 µm.

2. The polarizing ophthalmic lens according to claim 1, wherein the thickness of A1) and the thickness of A2), identical or different, are from 25 µm to 80 µm, in particular from 28 µm to 60 µm, in particular from 30 µm to 55 µm, in particular from 33 µm to 50 µm, in particular from 35 µm to 45 µm, in particular from 36 µm to 44 µm, in particular from 37 µm to 43 µm, in particular from 38 µm to 42 µm, in particular from 39 µm to 41 µm.

3. The polarizing ophthalmic lens according to claim 1 or claim 2, wherein the thickness of B) is from 25 µm to 35 µm, in particular from 26 µm to 34 µm, in particular from 27 µm to 33 µm, in particular from 28 µm to 32 µm, in particular from 29 µm to 31 µm.

4. The polarizing ophthalmic lens according to any one of claims 1 to 3, further comprising an intermediate adhesive layer C1) between film B) and layer A1) and/or an intermediate adhesive layer C2) between film B) and layer A2).

5. The polarizing ophthalmic lens according to claim 4, wherein the thickness of intermediate adhesive layer C1) and the thickness of intermediate adhesive layer C2), identical or different, is lower than or equal to 4 µm.

6. The polarizing ophthalmic lens according to claim 5, wherein the thickness of C1) and the thickness of C2), identical or different, are from 0.5 µm to 3.5 µm, in particular from 1 µm to 3 µm, in particular from 1.5 µm to 2.5 µm.

7. The polarizing ophthalmic lens according to any one of claims 1 to 6, further comprising a dried primer layer D1) applied on layer A1) and/or a dried primer layer D2) applied on layer A2), D1) and D2) being identical or different.

8. The polarizing ophthalmic lens according to claim 7, wherein the thickness of D1) and the thickness of D2), identical or different, are each lower than or equal to 4 µm.

9. The polarizing ophthalmic lens according to claim 8, wherein the thickness of D1) and the thickness of D2), identical or different, are from 0.5 µm to 3.5 µm, in particular from 1 µm to 3 µm, in particular from 1.5 µm to 2.5 µm.

10. The polarizing ophthalmic lens according to any one of claims 1 to 9, wherein the thermoplastic films A1) and A2) independently comprises polycarbonate (PC), polymethyl methacrylate (PMMA), polyamide (nylon), polyester (PET), cellulose acetate butyrate (CAB), triacetyl cellulose (TAC), cyclic olefin copolymer (COC) or a mixture thereof.

11. The polarizing ophthalmic lens according to any one of claims 1 to 10, wherein the polymeric material is a thermosetting polymer [CR39, MR7] or a thermoplastic polymer.

12. The polarizing ophthalmic lens according to any one of claims 1 to 11, having a curved shape.

13. The polarizing ophthalmic lens according to any one of claims 1 to 12, wherein the thickness of the polymeric material throughout the polarizing ophthalmic lens is not uniform.

14. The polarizing ophthalmic lens according to claim 11, wherein the thermoplastic polymer is polycarbonate.

15. The polarizing ophthalmic lens according to claim 11, wherein the thermosetting polymer is a urethane or thiourethane polymer [MR-7] or diethylene glycol bis allyl carbonate [CR39].

16. The polarizing ophthalmic lens according to any one of claims 1 to 15, further comprising a hard coat applied on at least one surface of the polarizing ophthalmic lens.

17. The polarizing ophthalmic lens according to any one of claims 1 to 16, wherein the ophthalmic lens is a semi-finished or a finished lens.

18. A method for manufacturing a polarizing ophthalmic lens according to any one of claims 1 to 17, comprising the following steps:
- Providing a polarizing wafer comprising, stacked to one another in the following order:
A1) a thermoplastic film,
B) a PVA polarizing film,
A2) a thermoplastic film,
A1) and A2) being identical or different,
the thickness of A1) and the thickness of A2) being identical or different, and
wherein the thickness of A1) and the thickness of A2) are each lower than or equal to 50 µm,
the thickness of B) is lower than or equal to 40 µm;
- Providing a liquid polymerizable composition containing monomers or oligomers which form the polymeric material when polymerized;
- Cutting and forming the polarizing wafer so as to obtain a curved polarizing wafer;
- Placing the curved polarizing wafer in a casting cell;
- Introducing the polymerizable liquid composition in the casting cell and depositing the polymerizable liquid composition on one side of the polarizing wafer or so as the polarizing wafer is embedded into the polymerizable liquid composition;
- Polymerizing the polymerizable liquid composition in the casting cell thereby obtaining a polymerized material; and
- Demolding the polymerized material.

19. The method according to claim 18, wherein the polymerized material is surfaced.

20. The method according to claim 18 or claim 19, wherein the polymerized material is hard coated.

21. Use of a polarizing wafer in an ophthalmic lens comprising a polymeric material, the polarizing wafer being embedded into the polymeric material or positioned on a surface of the polymeric material,
the polarizing wafer comprising, stacked to one another in the following order:
A1) a thermoplastic film,
B) a PVA polarizing film,
A2) a thermoplastic film,
A1) and A2) being identical or different,
the thickness of A1) and the thickness of A2) being identical or different,
wherein the thickness of A1) and the thickness of A2) are each lower than or equal to 50 µm,
the thickness of B) is lower than or equal to 40 µm,
for conferring polarizing properties to the lens while avoiding or limiting optical distortion.

22. The use according to claim 21, wherein the thickness of A1) and the thickness of A2), identical or different, are from 25 µm to 80 µm, in particular from 28 µm to 60 µm, in particular from 30 µm to 55 µm, in particular from 33 µm to 50 µm, in particular from 35 µm to 45 µm, in particular from 36 µm to 44 µm, in particular from 37 µm to 43 µm, in particular from 38 µm to 42 µm, in particular from 39 µm to 41 µm.

23. The use according to claim 21 or claim 22, wherein the thickness of B) is from 25 µm to 35 µm, in particular from 26 µm to 34 µm, in particular from 27 µm to 33 µm, in particular from 28 µm to 32 µm, in particular from 29 µm to 31 µm.

24. The use according to any one of claims 21 to 23, further comprising an intermediate adhesive layer C1) between film B) and layer A1) and/or an intermediate adhesive layer C2) between film B) and layer A2).

25. The use according to claim 24, wherein the thickness of intermediate adhesive layer C1) and the thickness of intermediate adhesive layer C2), identical or different, are each lower than or equal to 4 µm.

26. The use according to claim 25, wherein the thickness of C1) and the thickness of C2), identical or different, are from 0.5 µm to 3.5 µm, in particular from 1 µm to 3 µm, in particular from 1.5 µm to 2.5 µm.

27. The use according to any one of claims 21 to 26, wherein the polarizing wafer further comprises a dried primer layer D1) applied on layer A1) and/or a dried primer layer D2) applied on layer A2), D1) and D2) being identical or different.

28. The use according to claim 27, wherein the thickness of D1) and the thickness of D2), identical or different, are each lower than or equal to 4 µm.

29. The use according to claim 28, wherein the thickness of D1) and the thickness of D2), identical or different, are from 0.5 µm to 3.5 µm, in particular from 1 µm to 3 µm, in particular from 1.5 µm to 2.5 µm.

30. The use according to any one of claims 21 to 29, wherein the thermoplastic films of the polarizing wafer (A1) and A2) independently comprises polycarbonate (PC), polymethyl methacrylate (PMMA), polyamide (nylon), polyester (PET), cellulose acetate butyrate (CAB), triacetyl cellulose (TAC), cyclic olefin copolymer (COC) or a mixture thereof.

31. The use according to any one of claims 21 to 30, wherein the polymeric material is a thermosetting polymer [CR39, MR7] or a thermoplastic polymer.

32. The use according to any one of claims 21 to 31, wherein the ophthalmic lens has a curved shape.

33. The use according to any one of claims 21 to 31, wherein the thickness of the polymeric material throughout the polarizing ophthalmic lens is not uniform.

34. The use according to claim 31, wherein the thermoplastic polymer is polycarbonate

35. The use according to claim 31, wherein the thermosetting polymer is a urethane or thiourethane polymer [MR-7] or diethylene glycol bis allyl carbonate [CR39].

36. The use according to any one of claims 21 to 35, wherein the ophthalmic lens further comprises a hard coat applied on at least one surface of the polarizing ophthalmic lens.

37. The use according to any one of claims 21 to 36, wherein the ophthalmic lens is a semi-finished or a finished lens.

38. A polarizing wafer comprising, stacked to one another in the following order:
A1) a thermoplastic film,
B) a PVA polarizing film,
A2) a thermoplastic film,
A1) and A2) being identical or different,
the thickness of A1) and the thickness of A2) being identical or different,
wherein the thickness of A1) and the thickness of A2) are each lower than or equal to 50 µm,
the thickness of B) is lower than or equal to 40 µm,
wherein the polarizing wafer further comprises a dried primer layer D1) applied on layer A1) and/or a dried primer layer D2) applied on layer A2), D1) and D2) being identical or different.

39. The polarizing wafer according to claim 38, wherein the thickness of A1) and the thickness of A2), identical or different, are from 25 µm to 80 µm, in particular from 28 µm to 60 µm, in particular from 30 µm to 55 µm, in particular from 33 µm to 50 µm, in particular from 35 µm to 45 µm, in particular from 36 µm to 44 µm, in particular from 37 µm to 43 µm, in particular from 38 µm to 42 µm, in particular from 39 µm to 41 µm.

40. The polarizing wafer according to claim 38 or claim 39, wherein the thickness of B) is from 25 µm to 35 µm, in particular from 26 µm to 34 µm, in particular from 27 µm to 33 µm, in particular from 28 µm to 32 µm, in particular from 29 µm to 31 µm.

41. The polarizing wafer according to any one of claims 38 to 40, further comprising an intermediate adhesive layer C1) between film B) and layer A1) and/or an intermediate adhesive layer C2) between film B) and layer A2).

42. The polarizing wafer according to claim 41, wherein the thickness of intermediate adhesive layer C1) and the thickness of intermediate adhesive layer C2), identical or different, are each lower than or equal to 4 µm.

43. The polarizing wafer according to claim 41, wherein the thickness of C1) and the thickness of C2), identical or different, are from 0.5 µm to 3.5 µm, in particular from 1 µm to 3 µm, in particular from 1.5 µm to 2.5 µm.

44. The polarizing wafer according to any one of claims 38 to 43, wherein the thickness of D1) and the thickness of D2), identical or different, are each lower than or equal to 4 µm.

45. The polarizing wafer according to claim 44, wherein the thickness of D1) and the thickness of D2), identical or different, are from 0.5 µm to 3.5 µm, in particular from 1 µm to 3 µm, in particular from 1.5 µm to 2.5 µm.

46. The polarizing wafer according to any one of claims 38 to 45, wherein the thermoplastic film layers A1) and A2) independently comprises polycarbonate (PC), polymethyl methacrylate (PMMA), polyamide (nylon), polyester (PET), cellulose acetate butyrate (CAB), triacetyl cellulose (TAC), cyclic olefin copolymer (COC) or a mixture thereof.

47. The polarizing wafer according to any one of claims 38 to 46, having a curved shape.
